# EUROPÄISCHE PATENTSCHRIFT

(11) **EP 0 662 899 B1**
(45) Veröffentlichungstag und Bekanntmachung des Hinweises auf die Patenterteilung: **10.04.1996**
(21) Anmeldenummer: 93920755.1
(22) Anmeldetag: 17.09.1993
(51) Int. Cl.: B62D 5/083

(54) **ZENTRIEREINRICHTUNG, INSBESONDERE FÜR LENKVENTILE**
CENTRING DEVICE, IN PARTICULAR A CENTRING DEVICE FOR STEERING VALVES
DISPOSITIF DE CENTRAGE, EN PARTICULIER POUR SOUPAPES DE BRAQUAGE

(30) Priorität: 30.09.1992 DE 4232813
(43) Veröffentlichungstag der Anmeldung: 19.07.1995
(73) Patentinhaber: ZF FRIEDRICHSHAFEN Aktiengesellschaft, D-88038 Friedrichshafen (DE)
(72) Erfinder: SCHÖFFEL, Jörgen, D-73527 Schwäbisch Gmünd (DE)
(86) Internationale Anmeldenummer: EP9302521
(87) Internationale Veröffentlichungsnummer: WO9407732

(56) Entgegenhaltungen:
- WO-A-87/02318
- DE-A- 2 404 580
- US-A- 4 790 793
- US-A- 5 070 957

## Beschreibung

Die Erfindung betrifft eine Zentriereinrichtung, insbesondere für Lenkventile in Kraftfahrzeugen. In Lenkgetrieben mit einer Zentriereinrichtung ist ein Antriebs- und ein Abtriebsteil vorgesehen, wobei diese Teile durch einen Drehstab miteinander verbunden und gegeneinander elastisch verdrehbar sind. Der Antriebsteil ist hülsenartig ausgeführt und umschließt den Drehstab. Der Abtriebsteil umschließt wiederum teilweise den Antriebsteil.

Eine solche Zentriereinrichtung läßt sich vorteilhaft für Lenkventile in Drehschieber- oder in Drehkolbenbauweise anwenden. Eine Ausführung nach diesem Baukonzept enthält die EP 0 244 449. Diese Zentriereinrichtung weist einen Metallfaltenbalg mit axialer Federwirkung auf, der am Antriebsteil befestigt ist und der über eine Mittenstellungsrasteinrichtung mit Vorspannung auf das Abtriebsteil einwirkt. Die Mittenstellungsrasteinrichtung besteht aus den beiden Bauteilen zugeordneten Schrägflächen mit dazwischenliegenden Wälzkörpern. Auf diese Weise erhält man am Antriebsteil eine von der Verdrehung der beiden Bauteile abhängige Rückstellkraft, die sich zur Verdrehkraft des Drehstabes addiert. Die Mittenstellungsrasteinrichtung übernimmt hierbei vorrangig die exakte Zentrierung der beiden gegeneinander verdrehbaren Bauteile. Diese Mittenstellungsrasteinrichtung benötigt hauptsächlich wegen des Metallfaltenbalgs axialen und radialen Einbauraum. Außerdem erfordert diese Einrichtung einen verhältnismäßig hohen Fertigungsaufwand, da man ein Zentrier- und ein Endstück am Faltenbalg und ein Zentrierstück am Abtriebsteil befestigen muß.

Der Erfindung liegt die Aufgabe zugrunde, eine mit einem Drehstab kombinierte Zentriereinrichtung zu finden, die bei sehr kleinem axialem Raumbedarf preisgünstig herstellbar ist.

Diese Aufgabe ist durch die im Anspruch 1 gekennzeichnete Zentriereinrichtung gelöst. Vorteilhafte Ausgestaltungen enthalten die Unteransprüche.

In einer Radialbohrung des Abtriebsteiles ist ein durch eine Feder in radialer Richtung belasteter Stift geführt, der in eine Schrägflächennut des Antriebsteiles eingreift. Dadurch, daß die Feder, der Stift und die Schrägflächennut in einer radialen Ebene, also übereinander liegen, spart man beträchtlichen Bauraum. Die Wandstärke des Abtriebsteils reicht für die Unterbringung der Zentrierelemente völlig aus und man benötigt axial und radial keinen zusätzlichen Bauraum.

Nach Anspruch 2 sieht man eine in die Stirnseite des Abtriebsteils eingearbeitete Ringnut vor, in die eine geschlitzte, ringförmige Feder eingesetzt ist. Die Feder liegt teilweise in der Ringnut an und hat im Bereich einer Verankerung mit dem Stift eine von der Kreisform abweichende Abflachung. Durch diese Maßnahme erhält man gute radiale Federeigenschaften und einen ausreichenden Freiraum für die Befestigung des Stiftes.

Nach Anspruch 3 kröpft man die Enden der ringförmigen Feder nach innen ab, so daß die Federbewegung in der Ringnut durch Reibungsverluste nicht beeinträchtigt ist.

Nach Anspruch 4 führt man das Stiftende zweckmäßig ballig aus. Die Gleiteigenschaften werden dadurch verbessert.

Die Erfindung wird nachfolgend anhand eines in der Zeichnung dargestellten Ausführungsbeispieles näher erläutert:
Es zeigen:
- Fig. 1: einen Längsschnitt durch die erfindungsgemäße Zentriereinrichtung und
- Fig. 2: einen Querschnitt nach der Linie II-II in Fig. 1.

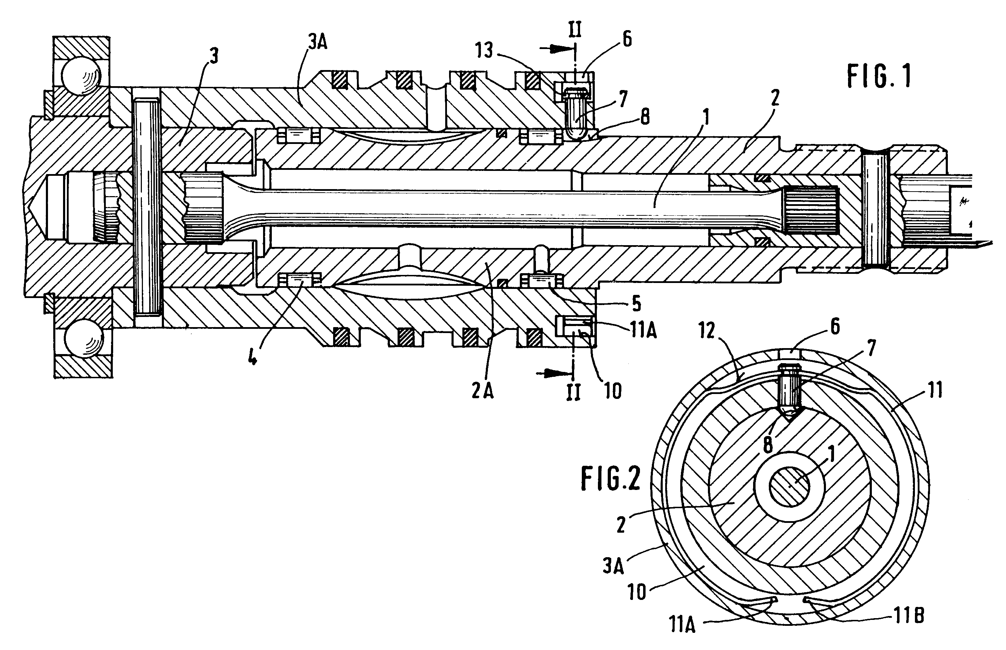

Nach Fig. 1 und 2 weist die Zentriereinrichtung einen Drehstab 1 auf, der an seinen verdickten Enden mit einem Antriebsteil 2 und einem Abtriebsteil 3 verstiftet ist. Der Antriebsteil 1 trägt in seiner Verlängerung z. B. einen Drehschieber 2A, der den wirksamen Teil des Drehstabes 1 nahezu auf seiner ganzen Länge umschließt. An den Abtriebsteil 3 schließt sich eine mit diesem drehfeste Ventilbuchse 3A an, in welcher der Drehschieber 2A eine Relativverdrehung ausführen kann. Zur Verringerung der Reibung können zwischen dem Drehschieber 2A und der Ventilbuchse 3A Nadellager 4 und 5 vorgesehen sein. Der Drehschieber 2A und die Ventilbuchse 3A bilden in bekannter Weise ein Drehschieberventil. Anstelle eines Drehschieberventils kann auch ein Drehkolbenventil bekannter Bauart vorgesehen sein.

Nach der Erfindung weist die Ventilbuchse eine Radialbohrung 6 auf, in der ein Stift 7 verschiebbar geführt ist. Der Stift 7 greift mit einem balligen Ende in eine Schrägflächennut 8 des Antriebsteiles 2 ein. In die freie Stirnseite der Ventilbuchse 3A ist eine Ringnut 10 eingearbeitet, die eine geschlitzte, ringförmige Feder 11 aufnimmt. Der Stift 7 ist im Bereich einer Abflachung 12 in eine Aussparung 13 der Feder 11 eingehängt. An die Abflachung 12 schließen sich an der äußeren Wand der Ringnut 10 anliegende Abschnitte 11A und 11B an. Diese Abschnitte 11A und 11B sorgen für eine gute Federdämpfung. Zweckmäßig kröpft man die Enden 11C und 11D ab.

Fuhren das Antriebsteil 2 und das Abtriebsteil 3 eine begrenzte Drehbewegung zur Anregelung eines Druckes zueinander aus, so drückt eine der Schrägflächen der Schrägflächennut 8 den Stift 7 nach oben. Dabei wölbt sich die Abflächung 12 gleichfalls nach oben. Wirkt keine Drehkraft mehr auf das Antriebsteil 2 ein, so bewegt sich der Stift 7 durch die gemeinsame Kraft des Drehstabes 1 und der Ringfeder 11 wieder nach unten in die gezeichnete Neutralstellung. Die aus der Feder 11, dem Stift 7 und der Schrägflächennut 8 bestehende Zentriereinrichtung sichert dabei die exakte Mittenstellung des Drehschieberventils 2A und 3A.

### Bezugszeichen

- 1: Drehstab
- 2: Antriebsteil
- 2A: Drehschieber
- 3: Abtriebsteil
- 3A: Ventilbuchse
- 4: Nadellager
- 5: Nadellager
- 6: Radialbohrung
- 7: Stift
- 8: Schrägflächennut
- 9: -
- 10: Ringnut
- 11: Feder
- 11A: Abschnitt von 11
- 11B: Abschnitt von 11
- 11C: Ende von 11
- 11D: Ende von 11
- 12: Abflachung
- 13: Aussparung

## Patentansprüche

1. Zentriereinrichtung, inbesondere für Lenkventile von Kraftfahrzeugen mit folgenden Merkmalen:
- es ist ein Antriebs- (2) und ein Abtriebsteil (3) vorgesehen, die durch einen Drehstab (1) miteinander verbunden und gegeneinander elastisch verdrehbar sind;
- der Antriebsteil (2) ist hülsenartig ausgeführt und umschließt den Drehstab (1);
- der Abtriebsteil umgreift teilweise den Antriebsteil (2),
**gekennzeichnet** durch folgende Merkmale:
- in einer Radialbohrung (6) des Abtriebsteiles ist ein durch eine Feder in radialer Richtung belasteter Stift (7) geführt und
- der Stift (7) greift in eine Schrägflächennut (8) des Antriebsteiles (2) ein.

2. Zentriereinrichtung nach Anspruch 1,
**gekennzeichnet** durch folgende Merkmale:
- in die freie Stirnseite des Abtriebsteils ist eine Ringnut (10) eingearbeitet;
- als Feder (11) ist eine in die Ringnut (10) eingesetzte, geschlitzte und ringförmige Feder (11) vorgesehen, die an der Außenfläche der Ringnut (10) anliegt und
- die Feder (11) ist im Bereich einer von der Kreisform abweichenden Abflachung (12) mit dem Stift (7) verankert.

3. Zentriereinrichtung nach Anspruch 1, dadurch **gekennzeichnet,** daß Enden (11A, 11B) der Feder (11) nach innen gekröpft sind.

4. Zentriereinrichtung nach Anspruch 1, dadurch **gekennzeichnet,** daß das in die Schrägflächennut (8) eingreifende Ende des Stifts (7) ballig ausgeführt ist.

## Claims

1. Centring device, in particular for steering valves of motor vehicles, having the following features:
- a drive part (2) and an output part (3) are provided, which are connected to one another by a torsion bar (1) and may twist resiliently relative to one another;
- the drive part (2) is constructed in the manner of a sleeve and encloses the torsion bar (1);
- the output part partially embraces the drive part (2),
characterized by the following features:
- a pin (7) loaded in a radial direction by a spring is guided in a radial bore (6) of the output part and
- the pin (7) engages into an angled-surface groove (8) of the drive part (2).

2. Centring device according to claim 1,
characterized by the following features:
- an annular groove (10) is worked into the free end face of the output part;
- as a spring, a slotted annular spring (11) is provided, which is inserted into the annular groove (10) and lies against the outer surface of the annular groove (10), and
- the spring (11) is anchored to the pin (7) in the region of a flattened portion (12) deviating from the annular shape.

3. Centring device according to claim 1, characterized in that ends (11A, 11B) of the spring (11) are bent inwards.

4. Centring device according to claim 1, characterized in that the end of the pin (7) engaging into the angled-surface groove (8) is crowned.

## Revendications

1. Dispositif de centrage, en particulier pour une soupape de braquage pour véhicules à moteur, ayant les caractéristiques suivantes :
- il comporte une partie (2) disposée du côté de l' entraînement et une partie (3) disposée du côté entraîné, qui sont accouplées par une tige rotative (1) et qui peuvent tourner élastiquement en sens inverse;
- la partie (2) disposée du côté de l' entraînement a une forme de douille qui entoure la tige rotative (1);
- la partie disposée du côté entraîné entoure partiellement la partie (2) disposée du côté de l'entraînement,
**caractérisé** en ce que
- une goupille (7), sollicitée radialement par un ressort, est logée dans un alésage radial (6) de la partie disposée du côté entraîné, et
- la goupille (7) est engagée dans une rainure (8) à flancs obliques de la partie (2) disposée du côté de l'entraînement.

2. Dispositif selon la revendication 1,
**caractérisé** en ce que :
- l'extrémité frontale libre de la partie disposée du côté entraîné, comporte une gorge annulaire (10);
- un ressort (11) est disposé dans cette gorge annulaire (10) et est constitué par une rondelle ressort fendue (11) qui prend appui contre la surface extérieure de la gorge annulaire (10), et
- le ressort (11) est bloqué en position par rapport à la goupille (7) dans une zone de méplat (12).

3. Dispositif selon la revendication 1, **caractérisé** en ce que les extrémités (11A, 11B) du ressort (11) sont rabattues vers l'intérieur.

4. Dispositif selon la revendication 1, **caractérisé** en ce que l'extrémité de la goupille (7), qui est engagée dans la rainure (8) à flancs obliques, a une forme arrondie.
